Europäisches Patentamt

European Patent Office

Office européen des brevets

(11) Publication number: **0 188 181 B1**

# (12) EUROPEAN PATENT SPECIFICATION

(45) Date of publication of patent specification: **14.08.91**   (51) Int. Cl.⁵: **F24J 3/00**, F25B 29/00, F25C 1/00

(21) Application number: **85850404.6**

(22) Date of filing: **19.12.85**

(54) **A method at a heat pump process and a heat pump device.**

(30) Priority: **17.01.85 SE 8500215**

(43) Date of publication of application:
**23.07.86 Bulletin 86/30**

(45) Publication of the grant of the patent:
**14.08.91 Bulletin 91/33**

(84) Designated Contracting States:
**BE DE FR GB IT NL SE**

(56) References cited:
**EP-A- 0 036 209**
**DE-A- 2 926 610**
**US-A- 4 044 819**

(73) Proprietor: **Hellman, Lars Gunnar**
**Norrtullsgatan 10**
**S-11327 Stockholm(SE)**

(72) Inventor: **Hellman, Lars Gunnar**
**Norrtullsgatan 10**
**S-11327 Stockholm(SE)**

(74) Representative: **Delmar, John-Ake**
**AB Delmar & Co Patentbyra P.O. Box 26 133**
**S-100 41 Stockholm(SE)**

Rank Xerox (UK) Business Services

## Description

The present invention relates to a method at a heat pump process and a heat pump device. The invention is particularly suitable when heat is extracted from a body of water the temperature of which is close to the freezing point.

In prior art heat pump devices condensors and evaporators are used which are designed as ordinary heat exchangers, i.e. the two media are kept apart so that heat has to be transferred to one of the media to the other through a conduit wall. It is above all a great disadvantage at the evaporator when one is working with small temperature differences between the two media. If one wishes to transfer a certain power between the media the heat transfer surface must increase when the temperature difference is decreased since creation of ice which deteriorates the heat transfer should be avoided as far as possible.

EP-A-0036209 describes a method of converting low temperature heat energy into high temperature heat energy comprising the following steps: a liquid heat medium having components of unequal boiling points is concentrated through evaporation of lower-boiling liquid; the vapour generated is condensed through absorption into an intermediate medium; the diluted intermediate medium is evaporated; and the vapour thus generated is absorbed into the concentrated higher-boiling liquid.

The present invention, which is defined in the appended claims, aims at creating a heat pump process which is suitable for using the heat in liquids, preferably water, the temperature of which cannot be allowed to sink particularly much. Examples of this are lake water, river water and similar in winter time. According to the invention expensive and clumsy evaporator designs are avoided. The above mentioned aims are achieved by mixing a hydrophilic liquid, e.g. water, with a hydrophobic cooling medium, e.g. normal butane, which is chemically and physically inert in presence of the hydrophilic liquid. The mixture is then introduced into an evaporator chamber where the cooling medium is brought to boil, whereby heat is taken up from the hydrophilic liquid by means of direct heat transfer therefrom.

In order to obtain efficient using of the invention it is advantageous to mix controlled quantities of liquid and cooling medium at such a pressure that evaporation of cooling medium is avoided. Because of the controlled mixing an interface of well defined size is obtained between the liquid and the cooling medium, which results in a constant heat transfer rate. The evaporator is advantageously made as an elongated container the length of which is at least eight times its equivalent diameter, $d = \mathrm{sqrt}\ (4A/3.14)$ where A is the cross-sectional area and d the equivalent diameter. The volume of the container is thereby chosen such that at least 98 % of the cooling medium has evaporated before the mixture of liquid and cooling medium has passed 50 % of the distance between the inlet and outlet ends for the liquid.

Because there is no solid surface between the two media it is advantageous to control the amount of cooling medium such that a substantial amount of liquid is phase converted. When using water this means that ice is created. With the present invention this is no disadvantage as long as the amount of phase converted medium is kept within such limits that a pumpable slurry is obtained. By substantial amount is meant that at least 10 %, preferably 20-25 %, of the liquid should be phase converted. By using the phase conversion heat a compact plant is obtained.

According to the invention the heat source, normally water, should be brought into contact with the cooling medium in such a way that a satisfactorily large heat transfer surface is guaranteed from the beginning at the interface between the two media. The size of this surface must be maintained because the heat transfer between the media and thus the amount of cooling medium vapor to the compressor is determined by the size of the heat transfer surface. In order to use the refrigeration compressor in an efficient way it is essential that the amount of cooling medium vapor is kept as constant as possible. This is achieved by using a static mixer which devides the two supplied flows, liquid and cooling medium, in smaller and smaller parts. Such a mixer can consist of a cylindrical tube in which a number of diametrically arranged plates are positioned after one another. The angular position of each plate in the tube varies along the length of the tube such that the angular position at the outlet end is displaced 90° relative to the angular position at the inlet end. Since all plates are mounted in the same way the inlet end of one plate will be at right angles to the outlet end of the preceding plate. In this way it is easy to divide the flows such that the number of particles of cooling medium becomes between $2^{15}$ and $2^{50}$ per ton. At the evaporation of the cooling medium such vapor volumes are created that satisfactory mixing of the media is obtained to guarantee a substantially complete evaporation. By suitable dimensioning of the evaporator cooling medium contents of less than 500 ppm at the outlet of the evaporator is obtained. Usually the content is less than 100 ppm. It is possible to work with very small temperature differences between the two media with this evaporator. If, for instance, a temperature difference of 1.0° C corresponds to a vapor pressure of 0.5 m water vaporization of the butane can be prevented in a liquid layer lying more than 0.5 m below the liquid surface. In order to prevent undesirable short circuit flows of liquid without boiling off of butane along the bottom of the evaporation container the container can be inclined from the inlet end and at the same time be provided with at least four cross walls to a height exceeding half the diameter serving as weirs for the ice slurry and liquid mixture respectively all with the aim of forcing all liquid to the surface for evaporation a number of times.

With the simplified way of producing ice, i.e. by using the phase conversion heat of the water, it is possible to find more applications for the technique according to the invention than what was possible before. An example of the invention and its application is the case when it is possible with the heat pump application to work with a closed water system. Water in a suitably dimensioned pond is the heat source. This heat source is used in a here described way by means of the invention i.e. ice is frozen from a suitable proportion of the water. The phase conversion heat obtained in this way is used according to the invention as earlier described. The produced ice is returned to the pond where it is stored until melting. The amount of water in the pond is adapted to climatic conditions so that it is possible to store heat for a day, a week or a month with the available amount of water. To keep this amount of water low it is possible according to the invention to increase the heat absorbtion capacity of the ice by means of suitable dyestuffs so that the ice heap in the pond functions as a solar radiation collector. In this way several goals are achieved. Firstly a cheap solar radiation collector has been created. This is possible because the solar radiation collector operates at a temperature that does not require thermal isolation towards the surroundings. Further, one works with a phase conversion system which makes it possible also when the outdoor temperature is below $0°C$ to obtain melting of the stored ice when the solar radiation is sufficiently strong. Melt water obtained in this way will penetrate the ice heap to be taken up by the pond. Through this application of the invention one has solved one of the many problems which have always been connected with solar radiation collector installations, namely the possibility of storing obtained solar energy in a cheap way so that it is possible to use the device continuously at all times. The storing furthermore occurs with one of the cheapest possible means.

The invention in the latest described embodiment can be shown in a calculation example.

With a power requirement of 50 kW continuously, which should correspond to a larger farm or similar, the heat source should supply power of the order of 33kW while the electric power of the heat pump is of the order of 17-20 kW. If the heat source is water of $0°C$ it is necessary to freeze about 350 kg ice per hour. This corresponds to a quantity of ice during one month of 250 $m^3$ at continuous operation. If this amount of ice should be stored in a 2 m deep pond it would correspond to a pond having a surface of 12x12 m. A storing requirement of three months would thus require a pond of the order of 10x50 m, which in connection with a farm is a small size. By taking water from the bottom of the pond to the heat pump and only freeze 20-25 % of the amount of water to ice so that the slurry still is pumpable there are good possibilities to distribute the ice on the ice heap which already exists above the water surface. On the sunny side of this ice mass the ice will melt to water also at temperatures below zero when the solar radiation is intensive.

Another application of the invention is the production of purified crystals of ice. The advantage of producing purified crystals of ice should be clear as an alternative to evaporation of process solutions. Crystallization methods in the process industry of other substances than ice have an enrichment factor of 1-100 or thereabout. By enrichment factor in this connection is understood that the crystals from a solution are 100 times purer than the solution generally. The result of a crystallization depends not only on the purity of the individual crystals. The result is equally depending on that there is no mother lye included in the crystal because of imperfections in the forms of the crystal. By means of a well tested crystallization technique, the same technique cannot be used for all process solutions, it is possible to increase the enrichment factor from the order of 100 to over 10 000 if one with technique according to the invention sees to it that only desired crystals are created in the evaporator. It is thus possible according to the invention to mix before the entry into the evaporator not only cooling medium and water but also between $10^6$ and $10^8$ crystallization germs per kilogram evaporated cooling medium. The crystallization germs are produced by grinding ice in a colloidal mill or similar. By this supply of crystallization germs it is possible, according to the invention, to control the crystallization growth so that only a controlled number of crystals is formed and obtains a growth rate which is proportional to the evaporated amount of cooling medium. The evaporated amount of cooling medium on the other hand is controlable because the heat transfer surface between cooling medium and water already before the entry into the evaporator has been determined to lie between certain limits. This together with a carefully controlled underpressure in the process container makes it possible to control the evaporation rate of the cooling medium in such a way that the crystallization can be driven to perfection so that the crystal forms allow a subsequent separation and washing with a very restricted amount of washing liquid in the centrifuge.

At compression of cooling medium vapor from the crystallization process and complete use of the heat content of the compressed vapor it is possible to achieve concentration of diluted process solutions without any substantial energy cost. In special cases where one has to be extra careful with discharge of substances from diluted process solutions together with the isolated ice this process can be repeated once more since the energy consumption is very low. The method according to the invention comprises in such a case a crystallization step from which the ice is isolated and melted in direct contact with cooling medium vapor compressed corresponding to a temperature increase of 3 to 10$^\circ$C. The so obtained two-phase mixture of cooling medium and melt water obtains a three- to fivefold dilution through supplied pure water before recrystallization in the way according to the invention with heat transfer to district heating nets or similar. By this described process such a purity of the isolated ice crystals can be obtained that even solutions which are sensitive from the environment aspect can be concentrated according to the invention.

Another application of the invention is in connection with chimney gas cleaning. The chimney gas is passed through a scrubber where the gas is cooled and cleaned. The water in the scrubber is thereby heated, e.g. from 40$^\circ$C to 50$^\circ$C. The heated water is then mixed with the cooling medium and passed into the evaporator as described above. In this way it is possible to obtain cleaning of chimney gases and to save energy at the same time as the capital and installation costs become low.

The invention and its application is of course not restricted to the examples given above but can be used in a variety of applications. Instead of normal technique at heat pump applications where treated municipal waste water is used as heat source and where great problems arise because of fouling of the evaporator surface with algae or similar one can use the technique according to the invention. It should be mentioned that at big heat pump plants working with municipal waste water it is not unusual to divide the temperature decrease in the water in two or three stages in order to obtain an improved heat factor. As an alternative to this it is well possible according to the invention to freeze an amount of lake water corresponding to the necessary heat takeout and if convenient from a discharge aspect to dump the ice in the heated waste water so that the ice melts again. In this way the same cooling is obtained as with the traditional technique.

If on the other hand one because of the locality does not have any treated municipal waste water or another heat source easy at hand one can of course discharge the ice into the recipient from which the water has been taken or dump it on land. When comparing the economy it is obvious that a heat pump compressor for all the desired capacity always is cheaper than two or three having the same total capacity. As regards the heat factor and its dependence on the temperature limits between which compression occurs shows at calculation that a very moderate improvement of the efficiency of the bigger single compressor well compensates for the loss in heat factor achieved when working from temperatures corresponding to the freezing point of ice.

According to the invention it is also possible to replace the condensor surface, where the compressed cooling medium vapor is condensed, with district heating water and a spray condensor where the water is in direct contact with the compressed cooling medium vapor. After the direct contact between the cooling medium and the district heating water the two phases are separated from each other gravimetrically after which the district heating water continues its circulation while the liquid cooling medium returns for renewed use in the heat pump process. Another example where the present invention is suitable is industrial drying processes where it is advantageous to use small temperature differences and work without conventional heat exchange surfaces. Air is hereby driven in a closed circuit. Humidity that is taken up at the drying is condensed in the evaporator. The air is then reheated by the condensor and conducted to the drying process.

As cooling medium one can of course use a number of substances. The criteria for their suitability are chemical stability against water, reluctance to form hydrates in the actual temperature and pressure ranges, suitable vapor pressure curve in respect of the actual temperature range within which the heat pump is to work, low costs and, not the least, harmless from a discharge aspect. It has turned out that normal butane has the advantages needed by almost all of the above demands. It is inert in its relation to water. It has shown no tendency to form hydrates. It is noncorrosive and has a suitable vapor pressure curve in respect of the actual temperature range and is considered unusually harmless in respect of discharge. By using a cooling medium which boils at a temperature of about 0$^\circ$C it is avoided that the evaporator container becomes unnecessarily expensive because of prevailing inner or outer overpressure.

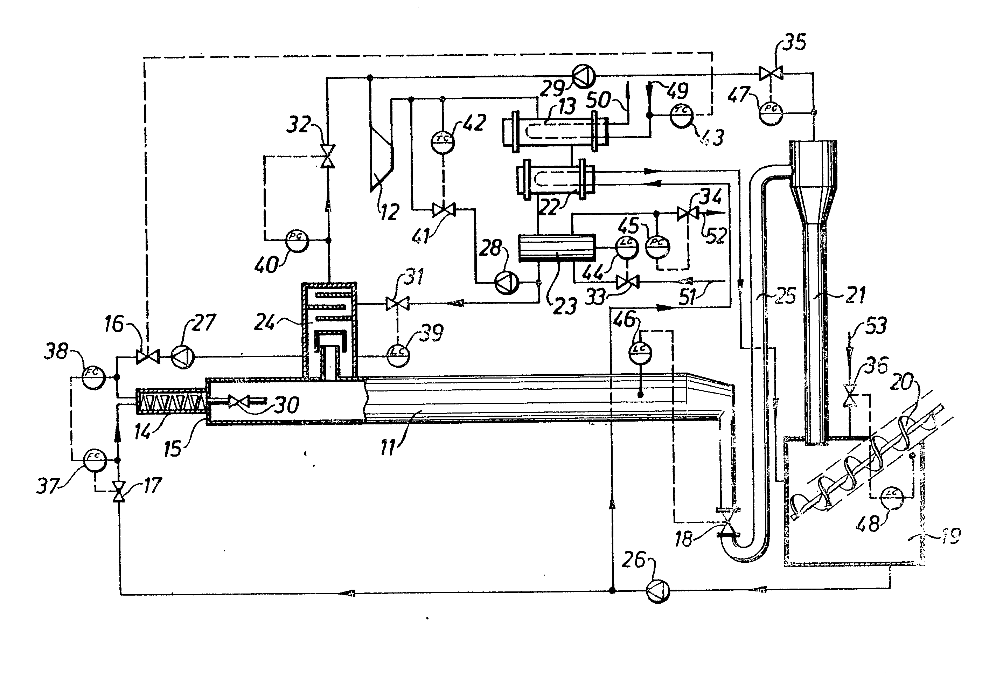

An embodiment of the invention is described below with reference to the accompanying drawing which schematically shows a heat pump device with an evaporator according to the invention.

The heat pump device shown in the drawing comprises a compressor 12, a condensor 13 and an evaporator 11. The condensor shown is a conventional heat exchanger which by means of conduits 49,50 is connected to a district heating net. The compressed cooling medium vapor, in the example normal butane, is from the compressor 12 conducted to the condensor 13 where the main part of the cooling medium is condensed. The cooling medium is then conducted to a final condensor 22 and from there to a container 23. A not shown butane supply is via a conduit 51 and a valve 33 connected to the container 23. The liquid level in the container is kept at a suitable value because the control unit 44 senses the liquid level and controls the valve 33 so that the liquid is kept at the desired level. Gases that may be solved in the cooling medium and leaves the medium in the container 23 are vented through valve 34 and conduit 52. Valve 34 is controlled by a control unit 45 which senses the pressure in container 23. Liquid cooling medium is supplied from container 23 by pump 28 via valve 41 at the outlet of compressor 12 in order to control the temperature of the compressed cooling medium vapor. A control unit 42 senses the temperature at the outlet of compressor 12 and controls valve 41. Liquid cooling medium is also conducted from container 23 via a valve 31 to a column 24 connected to the evaporator 11. The liquid level in column 24 is sensed by control unit 39 which controls valve 31. The cooling medium is driven from column 24 by pump 27 via valve 16 to a mixing chamber 14 in form of a static mixer. The flow through valve 16 is controlled by control unit 43 which senses the temperature of the liquid coming via conduit 49 from the district heating net.

Liquid, in the example water, is fed from a container 19 by pump 26 via a valve 17 to mixing chamber 14. Pump 26 also feeds liquid through the final condensor 22 to container 19. The flow through valve 17 is controlled by control units 37 and 38 so that the flows through valves 16 and 17 come in a predetermined relation relative to one another. Valves 16 and 17 are means for controlling of the supply of liquid and cooling medium to mixing chamber 14 such that an interface between liquid and cooling medium with a well defined total size is created so that constant heat transfer from the liquid to the cooling medium is obtained in the evaporator. The pressure in mixing chamber 14 is kept at such a level that the cooling medium is not evaporated in the mixing chamber. The mixture is conducted through a pressure reduction valve 30 to an evaporator 11. In the evaporator the cooling medium boils and leaves through the column 24 where the cooling medium vapor is washed by the liquid cooling medium. The cooling medium vapor is conducted from there via valve 32 to the inlet of compressor 12. The pressure in the column is sensed by control unit 40 which controls valve 32.

The flows through valves 16 and 17 are controlled such relative to one another that a substantial amount of liquid is phase converted, i.e. frozen to ice in evaporator 11. It has turned out to be suitable to freeze ice from 20-25 % of the liquid because then the slurry is still pumpable. The evaporator is provided with an inlet end 15 and an outlet end 18 in form of a valve. Valve 18 is controlled by a control unit 46 which senses the slurry level in evaporator 11. At a certain sensed level valve 18 is opened completely for a predetermined time so that the mixture of ice and water is fed out to a vacuum container 21 via conduit 25. Small amounts of remaining butane is conducted via valve 35 and pump 29 back to the inlet of the compressor. The flow through valve 35 is controlled by control unit 47 which senses the pressure in vacuum container 21. A feed screw 20 is arranged in container 19 to feed ice out of the container. The liquid level in container 19 is sensed by a control unit 48 which controls valve 36 through which liquid is supplied through conduit 53.

## Claims

1. A method at a heat pump process comprising evaporation, compression and condensing of a cooling medium, **characterized** in that a hydrophilic liquid and a hydrophobic cooling medium, which is chemically and physically inert in presence of the hydrophilic liquid, are mixed, that the mixture is conducted into an evaporator chamber (11) and that the cooling medium is brought to boil in the evaporator chamber, whereby heat is taken up from the hydrophilic liquid through direct heat transfer therefrom.

2. A method according to claim 1, **characterized** in that controlled amounts of hydrophilic liquid and hydrophobic cooling medium are supplied to and mixed in a mixing chamber (14), where the pressure is kept at such a level that evaporation of cooling medium is avoided, whereby an interface between the liquid and the cooling medium having a totally well defined size is created so that a constant heat transfer rate is obtained.

3. A method according to claim 1 or 2, **characterized** in that the amount of cooling medium is controlled such relative to the amount of liquid that the evaporation of cooling medium causes phase conversion of a substantial amount of liquid.

4. A method according to claim 1, 2 or 3, **characterized** in that crystallization germs in form of finely divided ice are mixed in in an amount of at least $10^6$ pieces per kg cooling medium before the evaporation.

5. A method according to any of the preceding claims, **characterized** in that the hydrophilic liquid is driven in a cycle through an open store functioning as a solar radiation collector and heat store and further through an evaporation chamber (11) and back to the store and that addition of means for increasing the heat absorption capacity of the liquid in the solar radiation collector is made.

6. A heat pump device comprising an evaporator (11), a compressor (12) and a condensor (13), **characterized** in that it comprises a mixing chamber (14) for mixing of a hydrophilic liquid and a hydrophobic cooling medium, which is chemically and physically inert in presence of the hydrophilic liquid, connected to the upstream end (15) of the evaporator; and means (16,17) for controlling the supply of liquid and cooling medium to the mixing chamber (14) such that an interface between liquid and cooling medium with a totally well defined size is created; said mixing chamber consisting of a cylindrical tube in which a number of diametrically arranged plates are positioned after one another such that the angular position of each plate in the tube varies along the length of the tube and the angular position at the outlet end is displaced 90° relative to the angular position at the inlet end.

7. A heat pump device according to claim 6, **characterized** in that the evaporator is formed as an elongated container (11) with a ratio between length and equivalent diameter which is greater than eight and a volume such that at least 98% of the cooling medium is evaporated before the mixture of liquid and cooling medium has passed 50% of the distance between the inlet end (15) and the outlet end (18) for the liquid.

8. A heat pump device according to claim 6 or 7, **characterized** in that said means (16,17) for controlling the supply of liquid and cooling medium are arranged such that a substantial amount of the liquid is phase converted to solid form when the cooling medium is evaporated.

9. A heat pump device according to any of claims 6-8, **characterized** by means for mixing in of crystallization germs in form of finely divided ice in an amount of at least $10^6$ pieces per kg cooling medium before the evaporator (11).

10. A heat pump device according to any of claims 6-9, **characterized** by a path for the hydrophilic liquid, said path comprising an open store, functioning as solar radiation collector and heat store, and said evaporator (11).

## Revendications

1. Une méthode de mise en oeuvre d'une pompe à chaleur comprenant l'évaporation, la compression et la condensation d'un milieu de refroidissement, caractérisée en ce qu'un liquide hydrophile et un milieu de refroidissement hydrophobe, qui est chimiquement et physiquement inerte en présence du liquide hydrophile, sont mélangés, le mélange est conduit dans une chambre d'évaporateur (11) et le milieu de refroidissement est amené à l'ébullition dans une chambre d'évaporateur, de sorte que la chaleur est enlevée du liquide hydrophile par transfert thermique direct à partir de ce liquide.

2. Une méthode selon la revendication 1, caractérisée en ce que des quantités contrôlées de liquide hydrophile et de milieu de refroidissement hydrophobe sont alimentées et mélangées dans une chambre de mélange (14), dans laquelle la pression est maintenue à un niveau tel que l'évaporation du milieu de refroidissement est évitée, de sorte qu'une interface entre le liquide et le milieu de refroidissement ayant une dimension totalement bien définie est créée de sorte qu'un taux constant de transfert thermique est obtenu.

3. Une méthdoe selon la revendication 1 ou 2, caractérisée en ce que la quantité de milieu de refroidissement est contrôlée par rapport à la quantité de liquide de façon telle que l'évaporation du milieu de refroidissement provoque une conversion de phase d'une quantité substantielle de liquide.

4. Une méthode selon la revendication 1, 2 ou 3, caractérisée en ce que des germes de cristallisation sous la forme de glace finement divisée sont mélangés en quantité d'au moins $10^6$ pièces par kg de milieu de refroidissement avant l'évaporation.

5. Une méthode selon l'une quelconque des revendications précédentes, caractérisée en ce que le liquide hydrophile est entraîné dans un cycle à travers un magasin ouvert fonctionnant comme un collecteur de rayonnement solaire et un magasin de chaleur et également à travers une chambre d'évaporation (11) et retourné au magasin et en ce que l'addition de moyens pour augmenter la capacité d'absorption thermique du liquide dans le collecteur de rayonnement solaire est faite.

6. Une pompe à chaleur comprenant un évaporateur (11), un compresseur (12) et un condenseur (13), caractérisée en ce qu'elle comprend une chambre de mélange (14) pour mélanger un liquide hydrophile avec un milieu de refroidissement hydrophobe, qui est chimiquement et physiquement inerte en présence du liquide hydrophile, reliée à l'extrémité amont (15) de l'évaporateur ; et des moyens (16, 17) pour contrôler l'alimentation du liquide et du milieu de refroidissement dans la chambre de mélange (14) de façon qu'une interface entre le liquide et le milieu de refroidissement avec une dimension totalement bien définie soit créée ; ladite chambre de mélange consistant en un tube cylindrique dans lequel un certain nombre de plateaux agencés diamétralement sont positionnés les uns après les autres de façon que la position angulaire de chaque plateau dans le tube varie le long du tube et que la position angulaire à l'extrémité de sortie est déplacée de 90° par rapport à la position angulaire à l'extrémité d'entrée.

7. Une pompe à chaleur selon la revendication 6, caractérisée en ce que l'évaporateur est formé d'un récipient allongé (11) avec un rapport entre la longueur et le diamètre équivalent qui est supérieur à 8 et un volume tel qu'au moins 98 % du milieu de refroidissement soit évaporé avant que le mélange du liquide et du milieu de refroidissement ait traversé 50 % de la distance entre l'extrémité d'entrée (15) et l'extrémité de sortie (18) pour le liquide.

8. Une pompe à chaleur selon la revendication 6 ou 7, caractérisée en ce que lesdits moyens (16, 17) pour contrôler l'alimentation du liquide et du milieu de refroidissement sont agencés de façon qu'une quantité substantielle du liquide subisse une conversion de phase en forme solide lorsque le milieu de refroidissement est évaporé.

9. Une pompe à chaleur selon l'une quelconque des revendications 6 à 8, caractérisée par un moyen pour introduire des germes de cristallisation sous la forme de glace finement divisée en quantité d'au moins $10^6$ pièces par kg de milieu de refroidissement avant l'évaporateur (11).

10. Une pompe à chaleur selon l'une quelconque des revendications 6 à 9, caractérisée par un trajet pour le liquide hydrophile, ledit trajet comprenant un magasin ouvert, fonctionnant comme collecteur de rayonnement solaire et un magasin de chaleur, et ledit évaporateur (11).

**Patentansprüche**

1. Verfahren in einem Wärmepumpenprozess, umfassend Verdampfung, Kompression and Kondensation eines Kühlmittels,
**dadurch gekennzeichnet,**
daß eine hydrophile Flüssigkeit und ein hydrophobes Kühlmittel, das bei der Anwesenheit der hydrophilen Flüssigkeit chemisch und physikalisch inert ist, gemischt werden, und daß das Gemisch in eine Verdampfungskammer (11) geleitet und das Kühlmittel in der Verdampfungskammer zum Kochen gebracht wird, wobei Wärme von der hydrophilen Flüssigkeit durch direkten Wärmeübergang aufgenommen wird.

2. Verfahren nach Anspruch 1,
**dadurch gekennzeichnet,**
daß gesteuerte Mengen hydrophiler Flüssigkeit und hydrophoben Kühlmittels einer Mischkammer (14) zugeführt und darin gemischt werden, in der der Druck auf einem solchen Niveau gehalten wird, daß die Verdampfung des Kühlmittels vermieden wird, wobei eine Grenzfläche zwischen Flüssigkeit und dem Kühlmittel, die eine sehr gut definierte Größe hat, so gebildet wird, daß eine konstante Wärmetransportrate aufrecht erhalten wird.

3. Verfahren nach Anspruch 1 oder 2,
**dadurch gekennzeichnet,**
daß die Menge des Kühlmittels bezüglich der Menge der Flüssigkeit so gesteuert wird, daß die Verdampfung des Kühlmittels eine Phasenkonversion einer wesentlichen Menge der Flüssigkeit verursacht.

4. Verfahren nach Anspruch 1, 2 oder 3,
**dadurch gekennzeichnet,**
daß Kristallisationskeime in Form von fein verteiltem Eis in einer Menge von mindestens $10^6$ Stück pro Kilogramm Kühlmittel vor der Verdampfung eingemischt werden.

5. Verfahren nach einem der vorhergehenden Ansprüche,

**dadurch gekennzeichnet,**
daß die hydrophile Flüssigkeit in einem Kreislauf durch einen offenen Speicher, der als Sonnenstrahlenkollektor und als Wärmespeicher arbeitet, und ferner durch eine Verdampfungskammer (11) und zurück in den Speicher getrieben wird, und daß eine Zusatzeinrichtung für die Erhöhung der Wärmeabsorbtionskapazität der Flüssigkeit im Sonnenstrahlenkollektor vorgesehen ist.

6. Wärmepumpenaufbau umfassend einen Verdampfer (11), einen Kompressor (12) und einen Verflüssiger (13),
**dadurch gekennzeichnet,**
daß er eine Mischkammer (14) umfaßt zum Mischen einer hydrophilen Flüssigkeit und eines hydrophoben Kühlmittels, welches bei der Anwesenheit der hydrophilen Flüssigkeit chemisch und physikalisch inert ist, wobei die Mischkammer mit dem stromaufwärts befindlichen Ende (15) des Verdampfers verbunden ist; und Vorrichtungen (16,17), die die Zufuhr von Flüssigkeit und Kühlmittel an die Mischkammer (14) so steuern, daß eine Grenzfläche zwischen der Flüssigkeit und dem Kühlmittel mit einer sehr gut definierten Größe gebildet wird; wobei die Mischkammer aus einer zylinderförmigen Röhre besteht, in der eine Anzahl von diametral eingebauten Platten nacheinander so angeordnet sind, daß die Winkelstellung jeder Platte in der Röhre sich längs der Länge der Röhre ändert und die Winkelstellung am Auslaßende um 90° bezüglich der Winkelstellung am Einlaßende versetzt ist.

7. Wärmepumpenaufbau nach Anspruch 6,
**dadurch gekennzeichnet,**
daß der Verdampfer als länglicher Behälter (11) geformt ist mit einem Verhältnis zwischen Länge und äquivalentem Durchmesser, der größer als acht ist, und ein solches Volumen hat, daß mindestens 98% des Kühlmittels verdampft wird, bevor das Gemisch aus Flüssigkeit und Kühlmittel 50% des Abstandes zwischen dem Einlaßende (15) und dem Auslaßende (18) für die Flüssigkeit durchflossen hat.

8. Wärmepumpenaufbau nach Anspruch 6 oder 7,
**dadurch gekennzeichnet,**
daß die Vorrichtungen (16,17) für die Steuerung der Zufuhr der Flüssigkeit und des Kühlmittels so angeordnet sind, daß eine wesentliche Menge der Flüssigkeit in feste Form übergeführt wird, wenn das Kühlmittel verdampft ist.

9. Wärmepumpenaufbau nach einem der Ansprüche 6 bis 8,
**gekennzeichnet durch**
eine Vorrichtung zum Einmischen von Kristallisationskeimen in Form von fein zerteiltem Eis in einer Menge von mindestens $10^6$ Stück pro Kilogramm Kühlmittel vor dem Verdampfer (11).

10. Wärmepumpenaufbau nach einem der Ansprüche 6 bis 9,
**gekennzeichnet durch**
einen Strömungsweg für die hydrophile Flüssigkeit, wobei der Strömungsweg einen offenen Speicher, der als Sonnenstrahlenkollektor und Wärmespeicher arbeitet, und den Verdampfer (11) umfaßt.